# FASCICULE DE BREVET EUROPEEN

(11) **EP 3 327 233 B1**
(45) Date de publication et mention de la délivrance du brevet: **20.11.2019**
(21) Numéro de dépôt: 17203170.0
(22) Date de dépôt: 22.11.2017
(51) Int. Cl.: E05D 15/06, F16C 29/06, F16C 29/04

(54) **SYSTÈME DE COULISSEMENT D'UN VANTAIL**
SCHIEBESYSTEM EINES FENSTER- ODER TÜRFLÜGELS
SYSTEM FOR SLIDING A DOOR LEAF

(30) Priorité: 23.11.2016 FR 1661385
(43) Date de publication de la demande: 30.05.2018
(73) Titulaire: LA CROISEE D.S., 16350 Champagne Mouton (FR)
(72) Inventeur: LECOINTE, Xavier, 16700 Condac (FR)
(74) Mandataire: Fédit-Loriot

(56) Documents cités:
- FR-A- 730 922
- JP-A- 2003 184 410
- JP-U- H 076 350
- KR-A- 20090 100 876

## Description

La présente invention concerne le domaine des systèmes de coulissement de vantaux de fenêtres ou de portes. L'invention s'applique notamment aux baies vitrées coulissant sur un rail au sol.

Il existe de façon générale des portes ou fenêtres comportant un ou plusieurs vantaux coulissants par rapport à un dormant. Un tel vantail est apte à coulisser dans un plan globalement vertical pour ouvrir ou fermer une ouverture délimitée par le dormant dans un mur par exemple.

De façon classique, pour son mouvement de coulissement, le vantail ou ouvrant coulissant est guidé le long d'un rail de guidage que comporte le dormant, le plus souvent disposé au sol en la traverse inférieure de ce dernier. Le vantail coulissant comporte, en vis-à-vis du rail de guidage, un ou plusieurs chariots qui sont aptes à coulisser le long du rail, de manière à permettre l'ouverture et la fermeture de la porte ou fenêtre. Ces chariots sont fixés à une traverse du vantail, généralement sous une traverse inférieure du vantail coulissant, le poids du vantail étant supporté par les chariots en appui sur le rail alors disposé dans la traverse au sol.

Une solution pour satisfaire aux normes relatives aux recommandations pour lutter contre les déperditions d'énergie est d'augmenter la surface isolante ou favorisant les apports solaires des vantaux de fenêtres par exemple. Par conséquent l'une des tendances est à rechercher à disposer de la plus grande hauteur possible du panneau du vantail pour augmenter et à diminuer la partie de profilé technique entourant le panneau où s'observent les déperditions d'énergie. Pour une baie vitrée, on cherche donc à augmenter la partie vitrée, dite le clair de vitrage, par rapport à la partie dite technique. La hauteur des chariots de coulissement porteurs du vantail conditionnant la partie technique métallique, on est amené à rechercher à minimiser la hauteur occupée au niveau du vantail par les chariots de coulissement.

L'invention vise à répondre à ce besoin.

Un chariot de coulissement classique, dans le cas d'un vantail coulissant guidé par un rail au sol, comporte un support qui est fixé sous la traverse inférieure du vantail coulissant, et une cage de galets de roulement insérée dans ce support, les galets étant montés rotatifs sur leurs axes respectifs. Le chariot n'est pas solidarisé au rail. Une solution pour augmenter la surface du panneau du vantail impliquerait de diminuer la hauteur des chariots, et donc celle des galets de roulement. La demanderesse a toutefois constaté qu'il est difficile de réduire la hauteur des galets de tels chariots sans en altérer le bon fonctionnement, notamment la qualité du roulage.

La demande de brevet KR 2009 0100876A décrit un système d'ouverture ou de fermeture d'un vantail de fenêtre par coulissement selon le préambule de la revendication 1, comprenant un chariot à roulement à billes placé sous le montant de la fenêtre et guidé en translation sur un rail dans le châssis de la fenêtre. Le chariot, en forme de T inversé, comprend une simple cage contenant un seul circuit de circulation de billes entre un logement en partie haute de la cage et un canal ouvert longitudinal, disposé au centre de la cage. Les billes présentes dans le canal roulent sur une piste centrale dudit rail. Le chariot repose sur le rail sans enserrer ledit rail. Le vantail peut présenter un clair de vitrage plus important, toutefois un tel
chariot est relativement instable lors de son roulement sur un rail. Il risque facilement de dérailler ou de se bloquer.

JP H07 6350 U divulgue un système de coulissement d'éléments courbes de tunnel munis en leurs deux extrémités latérales de chariots à recirculation de billes, chaque chariot enserrant un rail de guidage par côté d'élément courbe.

JP 2003 184410 A divulgue un système de coulissement d'une cloison montée coulissante en sa partie supérieure sur des chariots à recirculation de billes enserrant un rail de guidage suspendu.

Dans ces deux documents JP H07 6350 U et JP 2003 184410 A, les chariots comprennent chacun deux circuits de circulation de billes par côté, soit quatre circuits au total, et au moins l'un des deux circuits par côté de chariot guide latéralement le chariot qui enserre le rail pour stabiliser le chariot sur le rail.

L'invention vise à proposer un ensemble ouvrant dont la partie panneau occupe une surface le plus important possible, et dont le système de coulissement soit stable, fiable et apte à permettre de déplacer un vantail relativement lourd, notamment une baie vitrée, sur un rail dans une traverse de dormant au sol.

A cet effet, l'invention fournit un système de coulissement d'un vantail apte à coulisser dans un plan globalement vertical pour ouvrir ou fermer une ouverture délimitée par un dormant, ledit système comprenant les caractéristiques de la revendication 1.

Les deux logements et les deux canaux sont ainsi agencés de sorte qu'un logement et un canal d'un même côté longitudinal de la cage communiquent entre eux par l'intermédiaire de deux tronçons de recirculation, un tronçon reliant les extrémités respectives d'un logement et d'un canal les plus proches l'une de l'autre. Ledit logement, ledit canal et les tronçons de recirculation les reliant définissent un circuit de circulation des éléments de roulement du chariot pour un côté donné du chariot. Le chariot selon l'invention comporte donc deux circuits de circulation des éléments de roulement disposés symétriquement par rapport au plan vertical longitudinal central de la cage. En particulier les logements sont disposés parallèles entre eux, de même les canaux sont parallèles entre eux. Le corps central de la cage est en particulier avantageusement de forme parallélépipédique.

Ledit chariot du système de coulissement selon l'invention est ainsi très stable, et est apte à rouler sur un rail disposé en partie basse d'un dormant notamment posé au sol. Il est apte à faire coulisser un vantail suivant un rail de guidage avec un mouvement de bascule qui permet de suivre le relief du rail.

Les éléments de roulement, billes ou rouleaux, sont disposés jointifs et de sorte qu'ils puissent être rendus mobiles en rotation sur eux-mêmes et en translation par guidage dans le circuit de circulation sous l'action de déplacement en translation du chariot, en appui le long du rail de guidage sous le poids du vantail sur lequel est exercé une poussée. Le chariot du système de coulissement selon l'invention est apte à rouler en appui sur le rail de guidage lors du déplacement du vantail, ledit chariot reposant sur le rail sans enserrer ledit rail. Le chariot étant non solidarisé au rail, il peut donc être installé ou désinstallé du vantail, le rail étant en place.

Selon un mode de réalisation préféré de l'invention, lesdites surfaces respectives des pièces de recirculation et des pièces de support venant en contact sont formées pour les unes par une rampe intérieure pentue présente sur chacune des parois (internes) latérales longitudinales de chacune desdites pièces support et pour les autres par une surface bombée présente sur la face supérieure de chacune desdites pièces de recirculation.

Les surfaces bombées peuvent être prévues sur l'intérieur des pièces du support et les surface pentues prévues au niveau de la cage, toutefois ce mode de réalisation est un peu moins efficace que le mode préféré décrit ci-dessus pour générer le mouvement de bascule du chariot permettant de suivre le relief du rail.

Selon un autre mode de réalisation de l'invention, chaque pièce de recirculation comprend une partie proximale dont la surface est bombée, et chaque dite pièce de support présente sur ses parois latérales longitudinales une rampe intérieure pentue venant en contact avec la face bombée de ladite face supérieure de la pièce de recirculation.

Selon un autre mode de réalisation avantageux de l'invention, lesdites pièces de recirculation présentent chacune une face supérieure comprenant une partie proximale globalement horizontale dont la surface est bombée, prolongée par une partie distale inclinée. La partie inclinée favorise notamment la manipulation du chariot lors de son installation sous le vantail. Les qualificatifs « distale » et « proximale » sont définis relativement au corps central de la cage.

Pour une pièce de recirculation donnée, la cage comportant deux circuits de circulation des éléments de roulement, cette pièce comprend deux tronçons de recirculation creux et courbes qui sont disposés en regard de part et d'autre de ladite pièce, en particulier de part et d'autre du plan vertical longitudinal de symétrie des logements et canaux de circulation, soit le plan vertical longitudinal central de la cage, de sorte qu'un tronçon débouche d'une part en extrémité d'un logement de la partie supérieure du corps central et d'autre part en extrémité d'un canal de circulation en partie inférieure du corps central, canal ouvert en sa base, et qui sont présents d'un même coté dudit plan de symétrie.

Selon un autre mode de réalisation avantageux de l'invention, lesdits logements en partie supérieure du corps central de la cage sont excentrés par rapport aux dits canaux correspondants en partie basse, les tronçons de recirculation raccordant un dit logement et un dit canal d'un même côté longitudinal de la cage étant dans un plan sensiblement incliné par rapport au plan vertical longitudinal de la cage. Cette configuration permet d'avoir une cage de chariot compacte bien qu'elle comporte deux circuits de circulation, elle peut être d'une hauteur moindre que si un logement et un canal d'un même côté sont superposés juste l'un au-dessus de l'autre par exemple. Cette configuration permet donc d'augmenter encore la surface de panneau de l'ouvrant, en particulier le clair vitrage d'une baie vitrée.

Selon un mode préféré de réalisation de l'invention, le rail de guidage comprend deux chemins de roulements longitudinaux, agencés pour qu'un chemin vienne en correspondance avec la base du canal de circulation du chariot du même côté que lui. Plus particulièrement lesdits deux chemins de roulement sont disposés symétriquement par rapport au plan vertical longitudinal de symétrie des canaux longitudinaux de circulation du chariot, de sorte que les éléments de roulement retenus dans un canal de circulation apparaissant en la base ouverte dudit canal peuvent reposer en appui sur ledit chemin de roulement en correspondance avec le canal, lorsque le chariot est monté sous le vantail. En particulier lesdits chemins sont parallèles entre eux. Lesdits chemins de roulement sont présents en face supérieure du rail.

Selon un autre mode de réalisation avantageux de l'invention, lesdits deux chemins de roulement longitudinaux du rail, agencés de sorte que les éléments de roulement retenus dans un canal de circulation et apparaissant en sa base ouverte puissent venir en appui sur le chemin de roulement en correspondance avec ledit canal (lorsque le chariot est sous le vantail), sont tels que chaque chemin de roulement du rail se présentent sous forme d'une gorge (creusée dans le rail) d'une forme sensiblement adaptée à celle des éléments de roulement.

Selon un mode de réalisation préféré de l'invention, ledit rail du système de coulissement présente une arête longitudinale centrale utile au guidage du chariot, ladite arête se positionnant entre les canaux longitudinaux du chariot quand le chariot est en appui sur le rail, soit lorsque le chariot est monté sous le vantail.

Dans le cas préféré où le rail présente les deux chemins de roulement, lesdits chemins sont séparés par ladite arête centrale utile au guidage du chariot.

Selon un mode préféré de l'invention, lesdites pièces de support sont retenues entre elles par une liaison de type vis-écrou.

Selon un mode préféré de l'invention, le chariot est en outre réglable en hauteur, et par une liaison de type vis-écrou solidarisant les deux parties de support entre elles.

Selon un mode de réalisation avantageux, ladite vis de liaison permet le réglage en hauteur de la cage dans son support, sous l'action de vissage/dévissage de ladite vis, par glissement de la face supérieure d'une pièce de recirculation dans sa pièce support qui présente sur chacune de ses parois longitudinales une rampe intérieure pentue venant en contact avec une surface bombée de ladite face supérieure de la cage.

Selon un mode particulier de réalisation, ladite vis de liaison passe en outre dans une gorge présente le long de la face supérieure de la cage.

Selon un mode particulier de réalisation de l'invention, ledit système de coulissement comprend un plot de fixation solidarisé au support de chariot par emboîtement à force en bout d'une desdites pièces du support de chariot, et qui permet de fixer le chariot à la traverse du vantail.

Selon un mode avantageux de réalisation de l'invention, ledit chariot peut être équipé de racleurs, de préférence de forme biseautée, disposés en ses extrémités, au niveau des pièces de recirculation, afin d'enlever diverses salissures, et notamment des petits cailloux ou gravier présents sur le rail de coulissement.

L'invention concerne aussi un ensemble ouvrant comprenant un vantail apte à coulisser dans un plan globalement vertical pour ouvrir ou fermer une ouverture délimitée par un dormant et un système de coulissement à au moins un chariot solidarisé à la traverse basse du vantail, guidé en appui sur un rail solidarisé au dormant, caractérisé en ce que ledit système de coulissement est tel que décrit précédemment.

En particulier ledit rail est disposé en partie basse du dormant. Plus particulièrement, ledit rail est solidarisé à la traverse basse du dormant posée au sol. Le vantail coulisse ainsi dans son propre plan vertical, sur un rail dans une traverse au sol.

En particulier, le vantail est à panneau vitré. De préférence il est entièrement vitré, formant ainsi une baie vitrée.

L'invention concerne aussi un vantail coulissant, apte à être guidé le long d'un rail de guidage, en particulier d'un rail disposé en une traverse de dormant basse horizontale. Ledit vantail comporte, solidarisé à une de ses traverses horizontales, au moins un chariot à roulement à recirculation d'éléments de roulement sous forme de billes ou de rouleaux, qui permette son coulissement le long dudit rail pour son ouverture et sa fermeture dans un système de coulissement tel que décrit précédemment selon l'invention. En particulier l'invention concerne un vantail à panneau vitré, en particulier entièrement vitré.

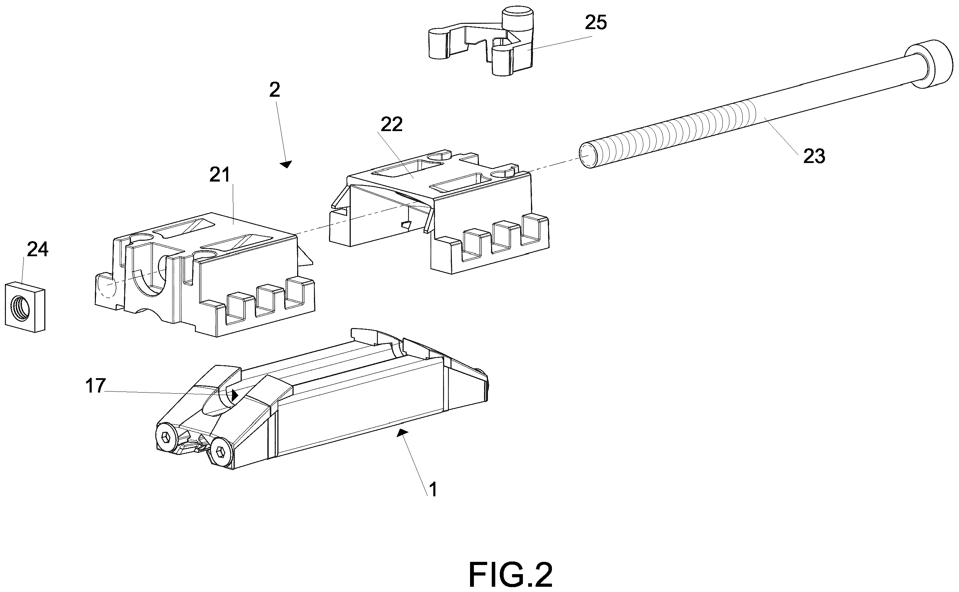

L'invention sera maintenant plus complètement décrite dans le cadre d'un exemple particulier et de caractéristiques préférées et de leurs avantages, en faisant référence aux figures 1 à 7 dans lesquelles :
- la figure 1 est une vue en perspective d'un système de coulissement formé d'un chariot de coulissement et d'un rail, le chariot étant représenté positionné sur le rail de roulement selon l'invention ;
- la figure 2 est une vue éclatée en perspective du chariot selon l'invention représenté en figure 1 ;
- la figure 3 est une vue éclatée en perspective de la cage du chariot selon l'invention représenté en figure 1 ou 2 ;
- la figure 4 est une vue en coupe longitudinale de la cage du chariot de la figure 3 ;
- la figure 5 est une vue en coupe transversale de la cage du chariot positionnée sur un rail tel que représenté en figure 1;
- la figure 6 est une vue en coupe longitudinale d'un chariot tel que celui représenté en figure 1 ou 2,
- la figure 7 est une vue en coupe transversale d'un chariot monté sous un vantail.

Tous les éléments ne sont pas toujours représentés à la même échelle pour la clarté des figures.

L'invention va être décrite dans le cadre d'un exemple particulier non limitatif d'un système de coulissement comprenant un chariot à recirculation d'éléments de roulement se présentant sous forme de billes, et se fixant en partie basse du vantail qu'il supporte.

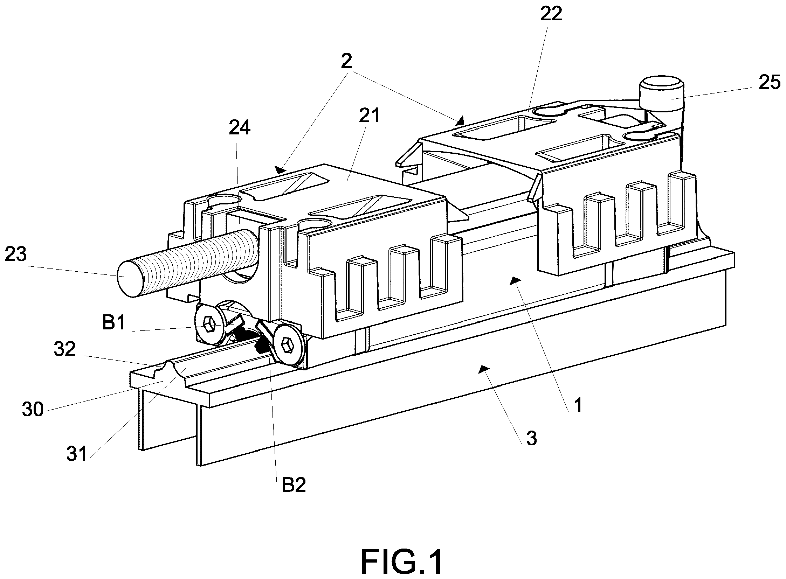

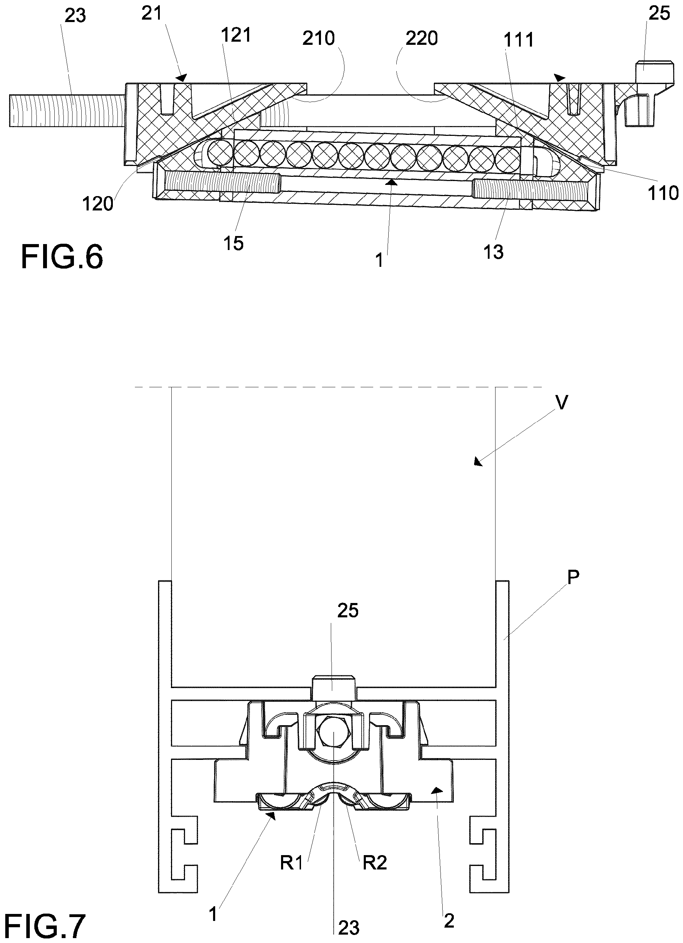

La figure 1 représente un système de coulissement selon l'invention, comprenant un chariot de coulissement et un rail, ledit chariot comprenant une cage 1, contenant des billes de roulement, insérée dans son support 2, et représenté positionné sur un rail de guidage 3, ledit chariot étant destiné à être fixé à la traverse de profilé P d'un vantail coulissant V, par exemple d'une fenêtre, comme illustré schématiquement en figure 7.

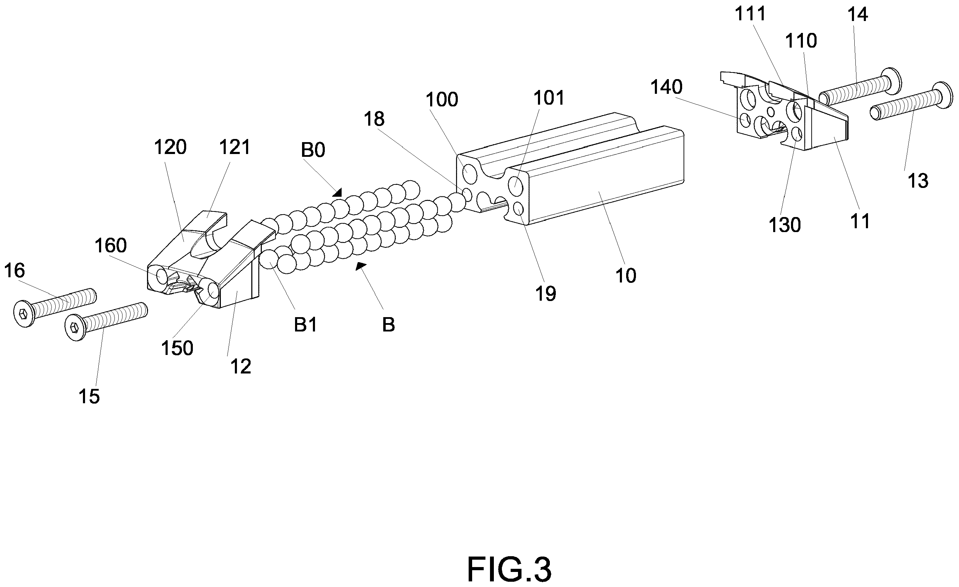

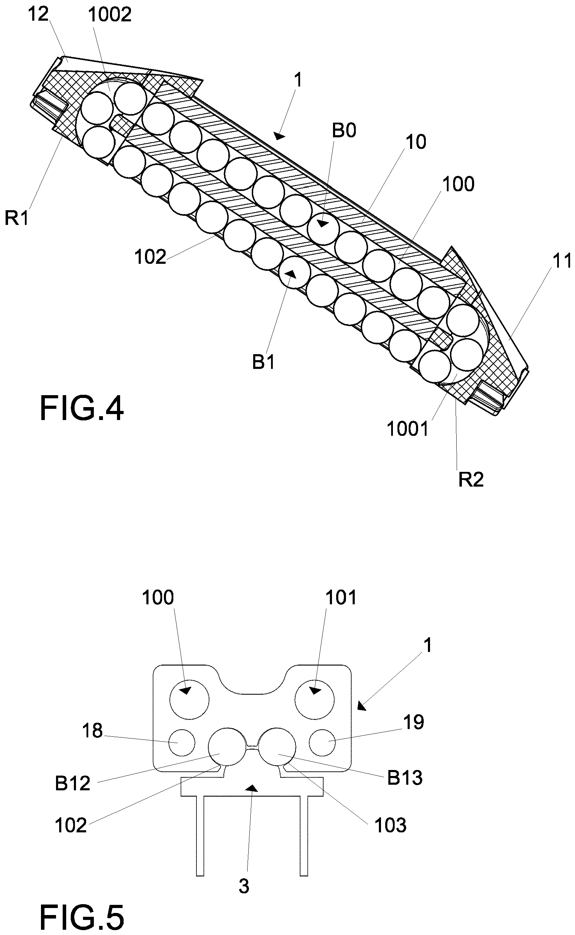

Une caractéristique de l'invention est la cage du chariot représentée en éclaté en figure 3 et en coupe longitudinale en figure 4. Cette cage 1 comprend deux logements longitudinaux cylindriques 100 et 101, creusés en partie supérieure du corps central 10 de la cage. Le corps central de la cage a une forme globalement parallélépipédique. Ces logements sont disposés parallèles entre eux dans le corps de la cage, symétriquement par rapport au plan vertical longitudinal de la cage, et ils contiennent des billes B0. Chaque extrémité des logements est prolongée par un tronçon de recirculation formé par une cavité, ayant une forme cylindrique décrivant une courbe dans un plan longitudinal sensiblement vertical. Ainsi un logement 100 est prolongé par deux cavités extrêmes 1001, 1002, présentes respectivement en chaque extrémité de cage 11, 12, qui guident les billes en circulation dans un plan globalement sensiblement longitudinal vertical. Ces cavités sont reliées en leur autre extrémité à des canaux présents en partie inférieure du corps central de la cage. Ces canaux longitudinaux de circulation des billes 102, 103, sont ouverts en leur base (figure 5 ou 4). Le canal de circulation est suffisamment ouvert en sa base pour que les billes B1 puissent être en contact avec le rail, tout en étant suffisamment fermé pour garder les billes captives. Le canal de circulation a en effet une forme globalement cylindrique d'un rayon de courbure adapté à la taille des billes qui permet d'y retenir les billes tout en guidant leur circulation par contact sur le chemin de roulement du rail de guidage du chariot en appui sur le rail.

Ainsi les billes dans un logement 100 en partie haute du corps central de la cage sont mises en circulation poussées par les billes qui se déplacent jointivement dans le canal de circulation lors du déplacement par translation longitudinale du chariot portant le vantail qu'on veut faire coulisser. Ledit logement 100 les guide jusqu'en sa sortie vers une cavité de recirculation de la cage 1002 qui les guide jusqu'au canal longitudinal de circulation 102 en partie basse du corps central 10 de la cage jusqu'à atteindre en extrémité de cage l'autre cavité courbe de recirculation 1001 qui les guident à nouveau dans ledit logement longitudinal 100. Les billes circulent ainsi en boucle entre leur logement et le canal de circulation ouvert sur le chemin de roulement du rail de guidage du chariot lorsque le chariot se déplace pour faire coulisser le vantail en translation par guidage en appui sur le rail. Le chariot comprenant deux agencements symétriques de rangées de billes jointives, et il roule sur deux chemins de roulement longitudinaux parallèles entre eux, présents symétriquement de part et d'autre du rail de guidage. Lesdits chemins sont avantageusement séparés par une arête longitudinale centrale concourant au guidage du chariot.

De préférence, pour augmenter le rayon de circulation des éléments de roulement dans les pièces d'extrémité de cage, les logements en partie supérieure du corps central de la cage sont légèrement excentrés par rapport aux canaux en partie basse. Les tronçons de recirculation raccordant un logement et un canal de même côté sont alors légèrement inclinés par rapport au plan vertical longitudinal. L'angle d'inclinaison peut être en particulier choisi entre 30 et 45 degrés. Cette configuration permet d'avoir une cage de forme relativement compacte, d'un volume assez faible, permettant par conséquent d'avoir un chariot de taille assez réduite, laissant la possibilité de diminuer la partie technique du vantail et ainsi d'avoir une surface de panneau importante.

Selon l'invention le chariot de coulissement, porteur de vantail coulissant, est tel que la cage comprend les éléments de roulement (billes ou rouleaux) disposés étroitement serrés de manière à former en la base ouverte des canaux une surface de roulement continue.

Le nombre d'éléments de roulement contenus dans le chariot est fonction du poids du vantail que ledit chariot doit supporter. La longueur du chariot est en conséquence fonction du nombre des éléments de roulement nécessaire pour que lesdits éléments d'un circuit de circulation donné restent jointifs.

La matière des éléments de roulement est choisie selon des critères techniques d'usage et de caractéristiques physiques des vantaux à équiper. Ils peuvent être par exemple en métal, notamment en acier, ou en une matière à base de polymère(s), en composite ou encore en céramique.

Le diamètre des éléments de roulement est choisi pour convenir au dimensionnel minimum du chariot correspondant à la traverse de coulissant minimum à équiper. A titre d'exemple un diamètre de 4 mm pourrait convenir pour un vantail de baie vitrée usuelle.

Les extrémités de cage se présentent selon cet exemple particulier sous forme de pièces séparées 11, 12, dites pièces de recirculation, qui comportent les cavités courbes formant les tronçons de recirculation, aboutées respectivement de part et d'autre du corps central de la cage. Par exemple lesdites pièces de recirculation 11, 12, sont solidarisées par vissage au corps central de la cage 10. Selon l'exemple en figure 3, deux groupes de vis de fixation 13, 14 ; 15, 16, passent respectivement dans des lumières 130, 140 ; 150, 160 respectives desdites pièces de recirculation, jusqu'à venir se visser dans des lumières respectivement en correspondance présentes dans le corps central. Sur la figure 3 sont représentées les vis de fixation 15, 16 de la pièce de recirculation 12 qui vont traverser ladite pièce en passant dans la lumière respective correspondante 150, 160 de ladite pièce pour aller se visser respectivement dans les lumières en correspondance 19, 18 du corps central 10.

De préférence, chacune des extrémités 11 et 12 de la cage du chariot présente une forme de surface particulière bombée permettant de donner, en coopération avec des surfaces de formes internes du support pentues, une certaine amplitude de mouvements relatifs entre la cage et son support. Il se crée en effet ainsi un mouvement de bascule possible entre les rampes rectilignes pentues 210, 220 des pièces support 21, 22 et les faces bombées 111, 121 de la cage. Le chariot peut ainsi rouler avec un certain mouvement dit de bascule qui permet au chariot de suivre les chemins de roulement du rail de guidage qui peuvent ne pas être parfaitement plans tant dans le plan horizontal que vertical.
Cette forme comprend une partie biseautée en la partie supérieure distale 110, 120 et une partie bombée en la partie supérieure proximale 111, 121. En d'autres termes, la face supérieure de chaque extrémité de la cage du chariot comprend une partie proximale dans un plan globalement horizontal mais dont la surface est bombée, prolongée par une partie distale inclinée.

Ces formes particulières permettent aussi le réglage en hauteur de la cage dans son support. Le support 2 peut selon un exemple préféré de l'invention comporter deux pièces évidées 21, 22, séparées, qui viennent respectivement s'emboîter aux extrémités de la cage 11, 12, les deux pièces de recirculation des éléments de roulement, en prise sur leurs faces supérieures 110, 111 ; 120, 121, une liaison de type vis-écrou solidarisant les pièces du support entre elles de sorte que les dites pièces support retiennent la cage entre elles. A l'intérieur de chaque pièce de support évidée se trouvent de part et d'autre, sur leurs parois latérales longitudinales, des rampes pentues 210, 220 qui viennent en appui sur la face proximale bombée de l'extrémité de cage correspondante.

Une fois la cage solidarisée à son support, comme expliqué ci-après, la forme de ces extrémités, principalement la forme bombée, est utile au réglage en hauteur du chariot par un effet de coin qui va faire monter ou descendre la cage dans le support sous l'action d'une liaison de type vis-écrou entre la cage et le support.

Une gorge centrale concave 17 est creusée longitudinalement en face supérieure externe de la cage, sur les pièces de recirculation et le corps central, pour y recevoir la vis de liaison 23. La vis à tête 23 est introduite dans une lumière réalisée dans la paroi transversale (extrême) d'une des deux pièces du support 22 qui vient recouvrir une paroi extrême de la cage, où elle est retenue par la tête. La vis passe dans la gorge de la cage jusqu'à ce que son extrémité filetée débouche à travers une lumière en la paroi transversale (extrême) de l'autre pièce de support 21 qui vient recouvrir l'autre paroi extrême de la cage, et pour s'insérer et se visser dans un écrou 24 encastré dans cette extrémité de pièce support. La cage est donc maintenue en ses extrémités, prise en tenailles, entre les deux pièces du support. En vissant plus ou moins la vis de liaison 23, on fait glisser les pièces du support 21, 22 sur la cage par glissement des rampes internes des pièces support en appui sur les faces bombées 111, 121 des pièces extrêmes de la cage 11, 12, ce qui permet d'agir sur la hauteur de la cage dans le support, et par conséquent de régler la hauteur du chariot par effet de coin.

L'angle d'inclinaison de la face supérieure distale des extrémités de la cage est avantageusement d'environ de 60 degrés par rapport aux chemins de roulement du chariot sur le rail (c'est-à-dire l'horizontale).

De plus la vis de liaison 23 entre la cage et son support peut avoir une course de réglage relativement longue, ce qui est avantageux pour ajuster la hauteur d'un chariot porteur d'un vantail relativement lourd. Le réglage de la hauteur du chariot peut être aisément finalisé une fois le vantail posé dans son dormant récepteur.

En outre un plot de fixation 25 est solidarisé au support de chariot, par exemple par emboîtement à force en bout d'une des pièces du support de chariot 22, plot qui permet de fixer le chariot à la traverse du vantail, selon cet exemple dans la traverse inférieure du vantail V, en particulier sous la traverse. Avantageusement ce plot peut être utile aussi au guidage de la clé de vissage de la vis de liaison cage-support et aussi de réglage en hauteur du chariot, par exemple grâce à un évidement dans lequel passera la clé.

Le chariot selon l'invention peut fonctionner sur un rail de guidage connu en soi et couramment utilisé pour les chariots à galets, les chemins de roulement pour les éléments de roulement (billes ou rouleaux) se situant, sur la face supérieure du rail, de part et d'autre de la ligne centrale en saillie longitudinale de guidage à section sensiblement triangulaire et qui sert habituellement de piste de roulement des galets.

Toutefois, de préférence, le rail de guidage du chariot est avantageusement un rail adapté au chariot à roulement à billes (ou rouleaux), décrit précédemment. Selon ce mode préféré de l'invention, chaque chemin de roulement du rail de guidage se présente alors sous forme d'une gorge longitudinale 31, 32. La gorge a une forme adaptée aux éléments de roulement, par exemple pour des billes elle a une forme concave dont l'arrondi est adapté pour assurer un bon contact entre les billes et le rail et pour aider au mieux au guidage et roulage des billes. Un tel exemple est illustré en figure 1 ou figure 5. Cette figure 5, suivant une vue en coupe centrale transversale de la cage du chariot disposée sur le rail de guidage 3, illustre les billes B12 et B13 en circulation sur leur chemin de roulement longitudinal respectif 32, 31 du rail 3, tout en étant aussi guidées, respectivement à leur côté de chariot, dans les canaux longitudinaux 102, 103 ouverts en partie basse du corps central de la cage. De plus l'arête centrale 30 qui fait saillie en séparant ces chemins de roulement en face supérieure du rail pourra être utile à l'amélioration du guidage du chariot sur le rail.

En outre, pour éviter les salissures lors de l'usage du chariot de coulissement sur un rail au sol notamment, le chariot peut être avantageusement équipé de racleurs R1, R2 de préférence de forme biseautée pour plus d'efficacité, disposés en ses extrémités, au niveau des pièces de recirculation 11, 12. Des brossettes peuvent aussi être installées sur le chariot et/ou sur le vantail, et de préférence disposées plus en extrémités que les racleurs lorsqu'elles sont sur le chariot.

L'invention a été illustrée dans le cadre de l'exemple particulier d'un chariot à recirculation de billes, mais peut-être aisément adaptée au cas de rouleaux qui se présentent sous forme de petits cylindres. En effet, selon l'invention dans le cas où les éléments de roulement se présentent sous forme d'une pluralité de rouleaux, lesdits éléments sont disposés les uns à la suite des autres, transversalement, suivant leur axe de révolution, dans les parties réceptrices de la cage du chariot que sont les logements, canaux et tronçons de recirculation formant le circuit de circulation desdits éléments. Lesdites parties réceptrices ont une forme globalement parallélépipédique adaptée à contenir ou retenir ces éléments. De même les gorges formant les chemins de roulement du rail de guidage ont une forme globalement parallélépipédique adaptée aux rouleaux.

La description qui précède explique clairement comment l'invention permet d'atteindre les objectifs qu'elle s'est fixés. Le système de coulissement selon l'invention permet d'obtenir de manière surprenante un bon roulage du chariot sur le rail pour faire coulisser un vantail qu'il supporte, même de poids élevé, bien que les éléments de roulement, billes ou rouleaux, soient de plus petit diamètre que celui des galets habituellement utilisés dans ce domaine. Du fait que la hauteur du chariot est moindre que celle d'un chariot à galets, la cage étant très compacte, permet avantageusement que la partie dite le clair de vitrage du vantail puisse être plus importante, ceci favorisant les apports solaires, tout en ayant un roulage stable. Le chariot étant équilibré par son fonctionnement avec deux circuits de circulation donne un coulissement du chariot, et donc du vantail, très stable. Le chariot du système de coulissement selon l'invention permet de faire coulisser un vantail suivant un rail de guidage avec un mouvement de bascule qui permet de suivre le relief du rail, ce qui évite que le chariot se bloque ou déraille sur son parcours de roulement. Et ce bien que le rail et le chariot ne soient pas solidarisés directement entre eux, le chariot étant solidarisé uniquement au vantail, et le rail au dormant.

Le système de coulissement selon l'invention convient bien pour fournir un système de coulissement pour baie vitrée coulissante sur un rail de guidage disposé en traverse basse d'un dormant, notamment au sol.

De plus ce chariot présente aussi l'avantage supplémentaire d'être réglable en sa hauteur, même solidarisé à un vantail déjà installé.

## Revendications

1. Système de coulissement d'un vantail apte à coulisser dans un plan globalement vertical pour ouvrir ou fermer une ouverture délimitée par un dormant, ledit système comprenant au moins un chariot de coulissement se fixant sous le vantail et un rail de guidage dudit chariot se disposant en partie basse du dormant, ledit chariot comportant une cage de roulement contenant des éléments de roulement sous forme de billes ou de rouleaux, ladite cage de chariot comportant en sa partie supérieure au moins un logement longitudinal (100) qui contient desdits éléments de roulement et en sa partie inférieure au moins un canal longitudinal (102) de circulation ouvert en sa base, retenant desdits éléments de roulement, ledit logement et ledit canal étant agencés de sorte qu'ils communiquent entre eux par l'intermédiaire de tronçons creux et courbes (1001, 1002) récepteurs d'éléments de roulement, définissant des tronçons de recirculation, aptes au guidage des éléments de roulement entre ledit logement et ledit canal de sorte que lesdits éléments de roulement puissent circuler en boucle entre ledit logement et ledit canal lors du déplacement en translation du chariot sur le rail, ledit chariot reposant sur le rail sans enserrer ledit rail, **caractérisé en ce que** ladite cage de chariot comprend un corps central longitudinal (10) qui comporte en sa partie supérieure deux dits logements longitudinaux (100, 101), et disposés sensiblement symétriquement par rapport au plan vertical longitudinal central de la cage, et en sa partie inférieure deux dits canaux longitudinaux de circulation (102, 103), ouverts en leur base, et disposés sensiblement symétriquement par rapport audit plan vertical longitudinal central de la cage, et **en ce que** ladite cage comprend deux pièces extrêmes de recirculation (11, 12) respectivement aboutées avec ledit corps central (10), lesdites pièces comportant chacune deux tronçons de recirculation disposés en regard de part et d'autre dudit plan vertical longitudinal central de la cage, les tronçons de recirculation d'un même côté longitudinal des pièces de recirculation reliant respectivement une extrémité d'un dit logement et d'un dit canal dudit même côté, et **en ce que** ladite cage est insérée dans un support (2) à fixer au vantail, ledit support comprenant deux pièces de support (21, 22) creuses disposées en prise respective sur lesdites pièces de recirculation de la cage de sorte que la cage soit retenue entre ces deux pièces de support, et **en ce que** lesdites pièces de support (21, 22) et lesdites pièces de recirculation (11, 12) présentent des surfaces respectives venant en contact qui sont pour les unes pentues (210 ; 220) et pour les autres bombées (111, 121) de sorte que ces dites surfaces pentues et bombées coopèrent entre elles pour permettre un mouvement de bascule du chariot lorsqu'il coulisse en appui sur le rail.

2. Système de coulissement selon la revendication 1, **caractérisé par le fait que** lesdites surfaces respectives des pièces de recirculation (11, 12) et des pièces de support venant en contact sont formées pour les unes par une rampe intérieure pentue (210 ; 220) présente sur chacune des parois latérales longitudinales de chacune desdites pièces support et pour les autres par une surface bombée présente sur la face supérieure de chacune desdites pièces de recirculation.

3. Système selon la revendication 1 ou 2, **caractérisé par le fait que** lesdites pièces de recirculation (11, 12) présentent chacune une face supérieure comprenant une partie proximale globalement horizontale dont la surface est bombée (111, 121), prolongée par une partie distale inclinée (110, 120).

4. Système selon l'une des revendications 1 à 3, **caractérisé en ce que** lesdits logements en partie supérieure du corps central de la cage sont excentrés par rapport aux dits canaux correspondants en partie basse, les tronçons de recirculation raccordant un dit logement et un dit canal d'un même côté longitudinal de la cage étant dans un plan sensiblement incliné par rapport au plan vertical longitudinal de la cage.

5. Système selon l'une des revendications 1 à 4, **caractérisé en ce que** ledit rail (3) comprenant deux chemins de roulement longitudinaux (31, 32), de sorte que les éléments de roulement retenus dans un canal de circulation et apparaissant en sa base ouverte puissent venir en appui sur le chemin de roulement en correspondance avec ledit canal, chaque chemin de roulement du rail se présentant sous forme d'une gorge d'une forme sensiblement adaptée à celle des éléments de roulement.

6. Système selon l'une des revendications 1 à 5, **caractérisé en ce que** ledit rail (3) présente une arête longitudinale centrale (30) utile au guidage du chariot (30), ladite arête se positionnant entre les canaux longitudinaux du chariot quand le chariot est en appui sur le rail.

7. Système selon l'une des revendications 1 à 6, **caractérisé par le fait que** lesdites pièces de support (21, 22) sont retenues entre elles par une liaison de type vis-écrou.

8. Système selon l'une des revendications 2 à 6 et la revendication 7, **caractérisé par le fait que** ladite vis de liaison permet le réglage en hauteur de la cage dans son support, sous l'action de vissage/dévissage de ladite vis, par glissement de la face supérieure d'une pièce de recirculation dans sa pièce support qui présente sur chacune de ses parois longitudinales une rampe intérieure pentue (210 ; 220) venant en contact avec une surface bombée de ladite face supérieure de la cage.

9. Système selon la revendication 7 ou 8, **caractérisé par le fait que** ladite vis de liaison (23) passe en outre dans une gorge (17) présente le long de la face supérieure de la cage.

10. Système de coulissement selon l'une des revendications 1 à 9, **caractérisé en ce qu'**il comprend un plot de fixation (25) solidarisé au support de chariot par emboîtement à force en bout d'une desdites pièces du support de chariot (22), et qui permet de solidariser le chariot à la traverse du vantail.

11. Ensemble ouvrant comprenant un vantail apte à coulisser dans un plan globalement vertical pour ouvrir ou fermer une ouverture délimitée par un dormant et un système de coulissement à au moins un chariot solidarisé à la traverse basse du vantail, guidé en appui sur un rail solidarisé au dormant, **caractérisé en ce que** ledit système de coulissement est défini à l'une des revendications 1 à 10.

12. Ensemble ouvrant selon la revendication 11, **caractérisé en ce que** le rail de guidage est solidarisé à la traverse basse du dormant posée au sol.

13. Ensemble ouvrant selon la revendication 11 ou 12, **caractérisé en ce que** ledit vantail est à panneau entièrement vitré.

## Patentansprüche

1. System zum Verschieben eines Fenster- oder Türflügels, der in einer global vertikalen Ebene gleiten kann, um eine durch einen Fenster- oder Türrahmen begrenzte Öffnung zu öffnen oder zu schließen, wobei das System mindestens einen Gleitschlitten, der unter dem Fenster- oder Türflügel befestigt ist, und eine Führungsschiene des Schlittens, die am unteren Teil des Fenster- oder Türrahmens angeordnet ist, umfasst, wobei der Schlitten einen Lagerkäfig umfasst, der Rollelemente in Form von Kugeln oder Rollen enthält, wobei der Schlittenkäfig an seinem oberen Teil mindestens eine longitudinale Aufnahme (100), die die Rollelemente enthält, und an seinem unteren Teil mindestens einen longitudinalen Zirkulationskanal (102), der an seiner Basis offen ist, der die Rollelemente hält, umfasst, wobei die Aufnahme und der Kanal so angeordnet sind, dass sie über hohle und gekrümmte Abschnitte (1001, 1002) miteinander in Verbindung stehen, die Rollelemente aufnehmen, die Rückführungsabschnitte definieren, die zur Führung der Rollelemente zwischen der Aufnahme und dem Kanal geeignet sind, so dass die Rollelemente in einer Schleife zwischen der Aufnahme und dem Kanal bei der translatorischen Verlagerung des Schlittens auf der Schiene zirkulieren können, wobei der Schlitten auf der Schiene ruht, ohne die Schiene zu umschließen, wobei der Schlittenkäfig einen longitudinalen zentralen Körper (10) umfasst, der an seinem oberen Teil zwei longitudinale Aufnahmen (100, 101), die im Wesentlichen symmetrisch in Bezug auf die zentrale longitudinale vertikale Ebene des Käfigs angeordnet sind, und an seinem unteren Teil zwei longitudinale Zirkulationskanäle (102, 103), die an ihrer Basis offen sind und im Wesentlichen symmetrisch in Bezug auf die zentrale longitudinale vertikale Ebene des Käfigs angeordnet sind, umfasst, wobei der Käfig zwei Rückführungsendstücke (11, 12) umfasst, die jeweils mit dem zentralen Körper (10) zusammengefügt sind, wobei die Stücke jeweils zwei Rückführungsabschnitte umfassen, die auf beiden Seiten der zentralen longitudinalen vertikalen Ebene des Käfigs gegenüberliegend angeordnet sind, wobei die Rückführungsabschnitte auf einer gleichen longitudinalen Seite der Rückführungsstücke jeweils ein Ende einer Aufnahme und eines Kanals auf derselben Seite verbinden, wobei der Käfig in eine Stütze (2) zur Befestigung am Fenster- oder Türflügel eingesetzt ist, wobei das Schiebesystem **dadurch gekennzeichnet ist, dass** die Stütze zwei hohle Stützstücke (21, 22) umfasst, die in jeweiligem Eingriff an den Rückführungsstücken des Käfigs angeordnet sind, so dass der Käfig zwischen diesen zwei Stützstücken gehalten wird, und dass die Stützstücke (21, 22) und die Rückführungsstücke (11, 12) jeweilige Oberflächen aufweisen, die in Kontakt kommen, die zum einen abfallend (210; 220) und zum anderen gewölbt (111, 121) sind, so dass diese abfallenden und gewölbten Oberflächen miteinander zusammenwirken, um eine Kippbewegung des Schlittens zu ermöglichen, wenn er auf der Schiene abgestützt gleitet.

2. Schiebesystem nach Anspruch 1, **dadurch gekennzeichnet, dass** die jeweiligen Oberflächen der Rückführungsstücke (11, 12) und der Stützstücke, die in Kontakt kommen, zum einen durch eine abfallende innere Rampe (210; 220), die an jeder der longitudinalen Seitenwände von jedem der Stützstücke vorhanden ist, und zum anderen durch eine gewölbte Oberfläche, die an der oberen Fläche von jedem der Rückführungsstücke vorhanden ist, gebildet sind.

3. System nach Anspruch 1 oder 2, **dadurch gekennzeichnet, dass** die Rückführungsstücke (11, 12) jeweils eine obere Fläche mit einem global horizontalen proximalen Teil aufweisen, dessen Oberfläche gewölbt (111, 121) ist, die durch einen geneigten distalen Teil (110, 120) verlängert ist.

4. System nach einem der Ansprüche 1 bis 3, **dadurch gekennzeichnet, dass** die Aufnahmen am oberen Teil des zentralen Körpers des Käfigs in Bezug auf die entsprechenden Kanäle am unteren Teil exzentrisch sind, wobei die Rückführungsabschnitte, die eine Aufnahme und einen Kanal auf einer gleichen longitudinalen Seite des Käfigs verbinden, in einer Ebene liegen, die in Bezug auf die longitudinale vertikale Ebene des Käfigs im Wesentlichen geneigt ist.

5. System nach einem der Ansprüche 1 bis 4, **dadurch gekennzeichnet, dass** die Schiene (3) zwei longitudinale Rollwege (31, 32) umfasst, so dass die Rollelemente, die in einem Zirkulationskanal gehalten werden und an seiner offenen Basis erscheinen, am Rollweg in Übereinstimmung mit dem Kanal zur Anlage kommen können, wobei jeder Rollweg der Schiene in Form einer Nut mit einer Form vorliegt, die im Wesentlichen an jene der Rollelemente angepasst ist.

6. System nach einem der Ansprüche 1 bis 5, **dadurch gekennzeichnet, dass** die Schiene (3) eine zentrale longitudinale Kante (30) aufweist, die zur Führung des Schlittens (30) nützlich ist, wobei die Kante zwischen den longitudinalen Kanälen des Schlittens positioniert ist, wenn der Schlitten auf der Schiene abgestützt ist.

7. System nach einem der Ansprüche 1 bis 6, **dadurch gekennzeichnet, dass** die Stützstücke (21, 22) durch eine Verbindung vom Schrauben-Mutter-Typ gegenseitig festgehalten werden.

8. System nach einem der Ansprüche 2 bis 6 und Anspruch 7, **dadurch gekennzeichnet, dass** die Verbindungsschraube die Höhenregelung des Käfigs in seiner Stütze unter der Wirkung von Verschrauben/Losschrauben der Schraube durch Gleiten der oberen Fläche eines Rückführungsstücks in seinem Stützstück ermöglicht, das an jeder seiner longitudinalen Wände eine abfallende innere Rampe (210; 220) aufweist, die mit einer gewölbten Oberfläche der oberen Fläche des Käfigs in Kontakt kommt.

9. System nach Anspruch 7 oder 8, **dadurch gekennzeichnet, dass** die Verbindungsschraube (23) außerdem in einer Nut (17) verläuft, die entlang der oberen Fläche des Käfigs vorhanden ist.

10. Schiebesystem nach einem der Ansprüche 1 bis 9, **dadurch gekennzeichnet, dass** es einen Befestigungskontakt (25) umfasst, der mit der Schlittenstütze durch Einpressen am Ende von einem der Schlittenstützstücke (22) fest verbunden ist und der es ermöglicht, den Schlitten mit der Querstrebe des Fenster- oder Türflügels fest zu verbinden.

11. Schiebebaugruppe mit einem Fenster- oder Türflügel, der in einer global vertikalen Ebene gleiten kann, um eine durch einen Fenster- oder Türrahmen begrenzte Öffnung zu öffnen oder zu schließen, und einem Schiebesystem mit mindestens einem Schlitten, der mit der unteren Querstrebe des Fenster- oder Türflügels fest verbunden ist, der auf einer Schiene abgestützt geführt wird, die mit dem Fenster- oder Türrahmen fest verbunden ist, **dadurch gekennzeichnet, dass** das Schiebesystem in einem der Ansprüche 1 bis 10 definiert ist.

12. Schiebebaugruppe nach Anspruch 11, **dadurch gekennzeichnet, dass** die Führungsschiene mit der unteren Querstrebe des Fenster- oder Türrahmens fest verbunden ist, die auf den Boden gesetzt ist.

13. Schiebebaugruppe nach Anspruch 11 oder 12, **dadurch gekennzeichnet, dass** der Fenster- oder Türflügel eine vollständig verglaste Scheibe aufweist.

## Claims

1. A sliding system for a leaf intended to slide in a substantially vertical plane in order to open or close an opening delimited by a frame, said system comprising at least a sliding carriage being fixed under the leaf and a guiding rail for said carriage being provided at a lower part of the frame, said carriage including a bearing cage containing bearing elements under the form of balls or rollers, said carriage cage comprising in its upper part at least a longitudinal housing (100) which contains said bearing elements and in its lower part at least a longitudinal circulating channel (102) opened on its base, retaining said bearing elements, said housing and said channel being arranged so that they communicate between each other via hollow and curved sections (1001, 1002) accommodating bearing elements, defining recirculating sections, intended to the guidance of the bearing elements between said housing and said channel so that said bearing elements can circulate in loop between said housing and said channel during the translation movement of the carriage on the rail, said carriage being on the rail without surrounding said rail, **characterized in that** said carriage cage comprises a longitudinal central body (10) which includes in its upper part two of said longitudinal housings (100, 101), and provided substantially symmetrically relatively to the central longitudinal vertical plane of the cage and in its lower part two of said longitudinal circulating channels (102, 103), opened on their base, and provided substantially symmetrically relatively to said central longitudinal vertical plane of the cage, and **in that** said cage comprises two extreme recirculating parts (11, 12) respectively joined tip to tip with said central body (10), said parts including each one two recirculating sections provided facing each other on one part and the other of said central longitudinal vertical plane of the cage, the recirculating sections on the same longitudinal side of the recirculating parts respectively connecting an end of said housing and of said channel of said same side, and **in that** said cage is inserted into one support (2) to be fixed to the leaf, said support comprising two hollow support parts (21, 22) provided respectively engaged on said recirculating parts of the cage so that the cage is retained between these two support parts, and **in that** said support parts (21, 22) and said recirculating parts (11, 12) are provided with respective contacting surfaces which, for the ones, are sloping (210; 220) and, for the others, convex (111, 121) so that these said sloping and convex surfaces cooperate therebetween to allow a rocking movement of the carriage when it slides resting on the rail.

2. The sliding system according to claim 1, **characterized by** the fact that said respective surfaces of the recirculating parts (11, 12) and of the contacting support parts are for the ones formed with a sloping internal slope (210; 220) provided on each of the longitudinal side walls of each one of said support parts and, for the others, with a convex surface provided on the upper face of each one of said recirculating parts.

3. The system according to claim 1 or 2, **characterized by** the fact that said recirculating parts (11, 12) are each one provided with an upper face comprising a substantially horizontal proximal part whose surface is convex (111, 121), extended by a sloping distal part (110, 120).

4. The system according to one of claims 1 to 3, **characterized in that** said housings on the upper part of the cage central body are offset relatively to said corresponding channels on lower part, the recirculating sections connecting one said housing and one said channel on the same longitudinal side of the cage being in a plane substantially sloping relatively to the longitudinal vertical plane of the cage.

5. The system according to one of claims 1 to 4, **characterized in that** said rail (3) comprises two longitudinal bearing pathways (31, 32), so that the bearing elements retained in a circulating channel and appearing into its open base can bear against the bearing pathway in correspondence with said channel, each bearing pathway of the rail being provided as a throat of a shape substantially adapted to that of the bearing elements.

6. The system according to one of claims 1 to 5, **characterized in that** said rail (3) is provided with a central longitudinal edge (30) useful for the guidance of the carriage (30), said edge being positioned between the longitudinal channels of the carriage when the carriage is bearing against the rail.

7. The system according to one of claims 1 to 6, **characterized by** the fact that said support parts (21, 22) are retained therebetween by a connection of screw-nut type.

8. The system according to one of claims 2 to 6 and to claim 7, **characterized by** the fact that said connecting screw allows the height adjustment of the cage in its support, under the screwing/unscrewing action of said screw, by slipping of the upper face of a recirculating part in its support part which is provided, on each one of its longitudinal walls, with a sloping internal slope (210; 220) contacting a convex surface of said cage upper face.

9. The system according to claim 7 or 8, **characterized by** the fact that said connecting screw (23) further passes into a throat (17) provided along the cage upper face.

10. The sliding system according to one of claims 1 to 9, **characterized in that** it comprises a fixing pad (25) secured to the carriage support by force fitting at the tip of one of said parts of the carriage support (22), and which allows to secure the carriage to the leaf cross-piece.

11. An opening assembly comprising a leaf intended to slide in a substantially vertical plane in order to open or close an opening delimited by a frame and a sliding system with at least one carriage secured to the leaf lower cross-piece, guided by resting against a rail secured to the frame, **characterized in that** said sliding system is according to one of claims 1 to 10.

12. The opening assembly according to claim 11, **characterized in that** the guiding rail is secured to the frame lower cross-piece lying on the ground.

13. The opening assembly according to claim 11 or 12, **characterized in that** said leaf is provided with a totally glazed panel.
